(19)

Europäisches
Patentamt
European
Patent Office
Office européen
des brevets

(11) **EP 2 421 191 A2**

(12) **EUROPEAN PATENT APPLICATION**

(43) Date of publication:
**22.02.2012 Bulletin 2012/08**

(51) Int Cl.:
*H04L 1/18* (2006.01)      *H04L 5/00* (2006.01)

(21) Application number: **11006820.2**

(22) Date of filing: **19.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.08.2010 US 375044 P**

(71) Applicant: **HTC Corporation
Taoyuan County 330 (TW)**

(72) Inventor: **Jen, Yu-Chih
Taoyuan City
Taoyuan County 330 (TW)**

(74) Representative: **Emde, Eric et al
Wagner & Geyer
Gewürzmühlstrasse 5
80538 München (DE)**

(54) **Method of handling uplink reporting trigger and configuration and related communication device**

(57)      A method of handling acknowledgement/negative acknowledgment (ACK/NACK) information of a mobile device in a wireless communication system is disclosed. The mobile device supports a carrier aggregation (CA), and the method comprises being configured with a downlink (DL) semi-persistent scheduling (SPS) resource for transmission on a component carrier in a subframe by a network of the wireless communication system, and receiving at least one dynamic DL assignment for at least one scheduled DL transmission on at least one component carrier in the subframe from the network, and feeding back ACK/NACK information on a physical uplink (UL) control channel(PUCCH) corresponding to the DL semi-persistent scheduling transmission and the at least one scheduled DL transmission to the network according to a derived PUCCH ACK/NACK resource index indicating at least one of a PUCCH region and a PUCCH resource index.

50

Start — 500

Be configured with a DL semi-persistent scheduling resource for transmission on a component carrier in a subframe by a network of the wireless communication system, and receive at least one dynamic DL assignment for at least one scheduled DL transmission on at least one component carrier in the subframe from the network — 502

Feed back a first ACK/NACK for the DL semi-persistent scheduling transmission on a first PUCCH to the network according to a PUCCH ACK/NACK resource index associated with the DL semi-persistent scheduling resource — 504

Feed back a second ACK/NACK for the at least one scheduled DL transmission on a second PUCCH to the network according to a derived PUCCH ACK/NACK resource index associated with the at least one dynamic DL assignment — 506

End — 508

FIG. 5

EP 2 421 191 A2

# Description

## Background of the Invention

### 1. Field of the Invention

The present invention relates to a method used in a wireless communication system and related communication device, and more particularly, to a method of handling uplink reporting trigger and configuration in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME) , serving gateway, etc for NAS (Non Access Stratum) control.

UL control information in the LTE system includes an acknowledgement/negative acknowledgement (ACK/NACK) for downlink (DL) data, a channel quality indicator (CQI), a scheduling request (SR) and multiple-input multiple-output (MIMO) parameters of the UE. The UE may transmit the UL control information by using a dedicated resource. In this situation, the UE transmits the UL control information to an eNB on a physical uplink (UL) control channel (PUCCH) in the LTE system. Resource blocks allocated to the PUCCH in a subframe, i.e., a PUCCH region, locate on edges of a system bandwidth for a low out of band (OOB) emission and a low constraint on UL data scheduling. Besides, the resource blocks hop between slots (intra-subframe hopping) or between subframes (inter-subframe hopping) for gaining frequency diversity. On the other hand, the UE may also transmit the UL control information along with data. In this situation, the UE first multiplexes the UL control information and the data, and then transmits the multiplexed result to the eNB on a physical UL shared channel (PUSCH) in the LTE system. Please note that, the UE can only select the one of the PUCCH and the PUSCH to transmit the UL control information but not both so as to maintain a single carrier property, i.e., a low peak to average power ratio (PAPR) .

On the other hand, DL control information in the LTE system includes downlink control information (DCI). The DCI is transmitted on a physical DL control channel (PDCCH), and indicates information of resource assignments for the UE on the UL and the DL, respectively, by using 4 different DCI formats and their variations. In the LTE system, the PDCCH is transmitted by using one or multiple control channel elements (CCEs). A CCE includes 9 resource element groups (REGs), and a REG includes 4 REs. More specifically, there are 4 PDCCH formats, e.g., PDCCH formats 0, 1, 2 and 3, and these PDCCH formats occupy 1, 2, 4 and 8 CCEs, respectively. The 4 DCI formats with their variations are transmitted on corresponding 4 PDCCH formats.

In the LTE system, a physical DL shared channel (PDSCH) is the main channel for the eNB to transmit data to the UEs. Besides, the PDSCH can also be used for broadcasting system information and transmitting paging to the UEs. Corresponding resources for transmitting the PDSCH are indicated to the UEs in the PDCCH.

A long term evolution-advanced (LTE-A) system, as its name implies, is an evolution of the LTE system. The LTE-A system targets faster switching between power states, improves performance at the coverage edge of an eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. The LTE-A system supports the CA for both continuous and non-continuous component carriers with each component carrier limited to a maximum of 110 resource blocks. The CA increases bandwidth flexibility by aggregating the non-continuous component carriers. A component carrier is either used as a UL component carrier or a DL component carrier, but not both.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resources. The UL and DL primary component carriers are used for establishing and re-establishing the radio resource control (RRC), and transmitting and receiving the system information.

In the LTE system, a PUCCH ACK/NACK re-

source index $n_{\text{PUCCH}}^{(1)}$ is used to derive a PUCCH region and a PUCCH resource index (e.g. a cyclic shift index $\alpha(n_s,l)$ and/or an orthogonal sequence index $n_{oc}(n_s)$). Since there may be no first CCE location on the PDCCH for implication of the PUCCH ACK/NACK resource index when a semi-persistent scheduling (SPS) is configured, the PUCCH ACK/NACK resource index is configured semi-statically by a higher layer signaling. In the case of dynamically scheduled downlink data transmission on the PDSCH, the PUCCH ACK/NACK resource index is implicitly determined according to the index of the first CCE of the downlink control assignment. However, the LTE-A system supports the carrier aggregation, it is not clear which $n_{\text{PUCCH}}^{(1)}$ to be used when transmissions associated with both SPS assignment and dynamic assignment happen on different component carriers in the same subframe while there is only one PUCCH CC and/or ACK/NACK multiplexing of all component carriers in a subframe is adopted.

Moreover, the search space for scheduling transmission on each downlink component carrier may need to be redesigned. One example is that the SPS is scheduled on the primary component carrier while other component carriers are cross scheduled by the PDCCH on the primary component carrier. Therefore, a new mechanism is needed. Please note that in the LTE system, simultaneous SPS and dynamic assignments should not happen in the same subframe. Otherwise, a similar mechanism is also needed.

On the other hand, before an operator deploys a relay with respect to a corresponding eNB, the radio link (backhaul) between the relay and the corresponding eNB is measured first such that the radio link between the relay and the corresponding eNB is normally under a good condition. For simplicity, there are also many configurations that are semi-static and fixed. Among these configurations, how to configure relay Un PUCCH resources to maintain the operation between the relay and the corresponding eNB is a topic to be discussed and addressed.

Summary of the Invention

The present invention therefore provides a method and related communication device for handling uplink reporting trigger and configuration to solve the abovementioned problems.

A method of handling acknowledgement/negative acknowledgment (ACK/NACK) information of a mobile device in a wireless communication system is disclosed. The mobile device supports a carrier aggregation (CA), and the method comprises being configured with a downlink (DL) semi-persistent scheduling (SPS) resource for transmission on a component carrier in a subframe by a network of the wireless communication system, and receiving at least one dynamic DL assignment for at least one scheduled DL transmission on at least one component carrier in the subframe from the network, and feeding back ACK/NACK information on a physical uplink (UL) control channel(PUCCH) corresponding to the DL semi-persistent scheduling transmission and the at least one scheduled DL transmission to the network according to a derived PUCCH ACK/NACK resource index indicating at least one of a PUCCH region and a PUCCH resource index.

A method of handling acknowledgement/negative acknowledgment (ACK/NACK) information of a mobile device in a wireless communication system is disclosed. The mobile device supports a carrier aggregation (CA), and the method comprises being configured with a downlink (DL) semi-persistent scheduling (SPS) resource for transmission on a component carrier in a subframe by a network of the wireless communication system, and receiving at least one dynamic DL assignment for at least one scheduled DL transmission on at least one component carrier in the subframe from the network, feeding back a first ACK/NACK for the DL semi-persistent scheduling transmission on a first PUCCH to the network according to a PUCCH ACK/NACK resource index associated with the DL semi-persistent scheduling resource, and feeding back a second ACK/NACK for the at least one scheduled DL transmission on a second PUCCH to the network according to a derived PUCCH ACK/NACK resource index associated with the at least one dynamic DL assignment.

A method of handling acknowledgement/negative acknowledgment (ACK/NACK) information of a mobile device in a wireless communication system is disclosed. The mobile device supports a carrier aggregation (CA), and the method comprises being configured with a downlink (DL) semi-persistent scheduling (SPS) resource for transmission on a component carrier in a first subframe by a network of the wireless communication system, and receiving at least one dynamic DL assignment for at least one scheduled DL transmission on at least one component carrier in a second subframe from the network, feeding back a first ACK/NACK for the DL semi-persistent scheduling transmission on a first PUCCH in a third subframe to the network according to a PUCCH ACK/NACK resource index associated with the DL semi-persistent scheduling resource, and feeding back a second ACK/NACK for the at least one scheduled DL transmission on a second PUCCH in a fourth subframe to the network according to a derived PUCCH ACK/NACK resource index associated with the at least one dynamic DL assignment.

A method of handling acknowledgement/negative acknowledgment (ACK/NACK) information and PUCCH resources of a relay node of a wireless communication system is disclosed. The method comprises receiving a dynamic backhaul relay physical downlink (DL) shared channel (R-PDSCH) assignment via a relay physical DL control channel (R-PDCCH), being semi-statically configured with at least one physical uplink (UL) control channel (PUCCH) resource index and at least one PUCCH region by a higher layer signaling for relaying UL control information signaling, and being semi-statically configured with a plurality of ACK/NACK resources.

A method of handling acknowledgement/negative acknowledgment (ACK/NACK) information and PUCCH resources of a relay node of a wireless communication system is disclosed. The method comprises receiving a dynamic backhaul relay physical downlink (DL) shared channel (R-PDSCH) assignment via a relay physical DL control channel (R-PDCCH), being semi-statically configured with at least one physical uplink (UL) control channel (PUCCH) resource index and at least one PUCCH region according to a carrier indication field (CIF) configuration, and being semi-statically configured with a plurality of ACK/NACK resources according to the CIF configuration.

These and other objectives of the present invention will no doubt become obvious to those of ordinary skill in the art after reading the following detailed description of the preferred embodiment that is illustrated in the various figures and drawings.

Brief Description of the Drawings

Fig. 1 is a schematic diagram of an exemplary wireless communication system according to the present disclosure.

Fig. 2 is a schematic diagram of an exemplary communication device according to the present disclosure.

Fig. 3 is a schematic diagram of communication protocol layers for an exemplary wireless communication system.

Fig. 4 is a flowchart of an exemplary process according to the present disclosure.

Fig. 5 is a flowchart of an exemplary process according to the present disclosure.

Fig. 6 is a flowchart of an exemplary process according to the present disclosure.

Fig. 7 is a flowchart of an exemplary process according to the present disclosure.

Fig. 8 is a flowchart of an exemplary process according to the present disclosure.

Detailed Description

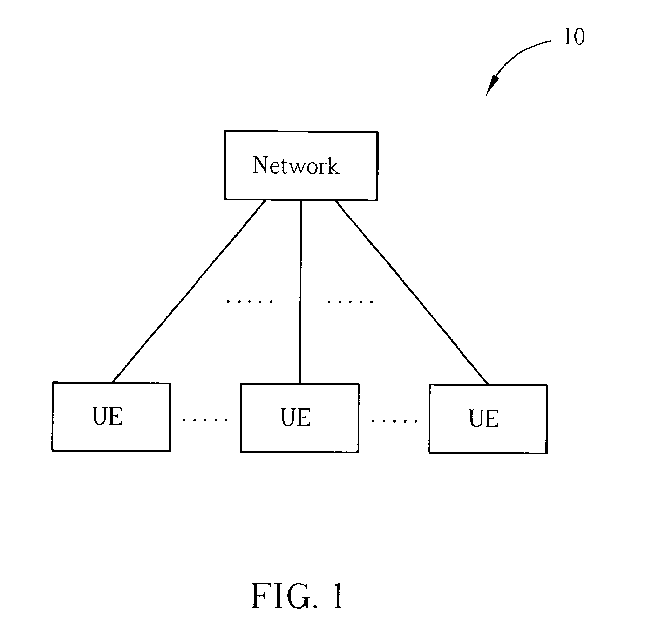

Please refer to Fig. 1, which is a schematic diagram of a wireless communication system 10 according to an example of the present invention. The wireless communication system 10, such as a long term evolution-advanced (LTE-A) system, is briefly composed of a network and a plurality of user equipments (UEs). In Fig. 1, the network and the UEs are simply utilized for illustrating the structure of the wireless communication system 10. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and a UE can be seen as a transmitter or a receiver according to transmission direction, e.g., for an uplink (UL), the UE is the transmitter and the network is the receiver, and for a downlink (DL), the network is the transmitter and the UE is the receiver.

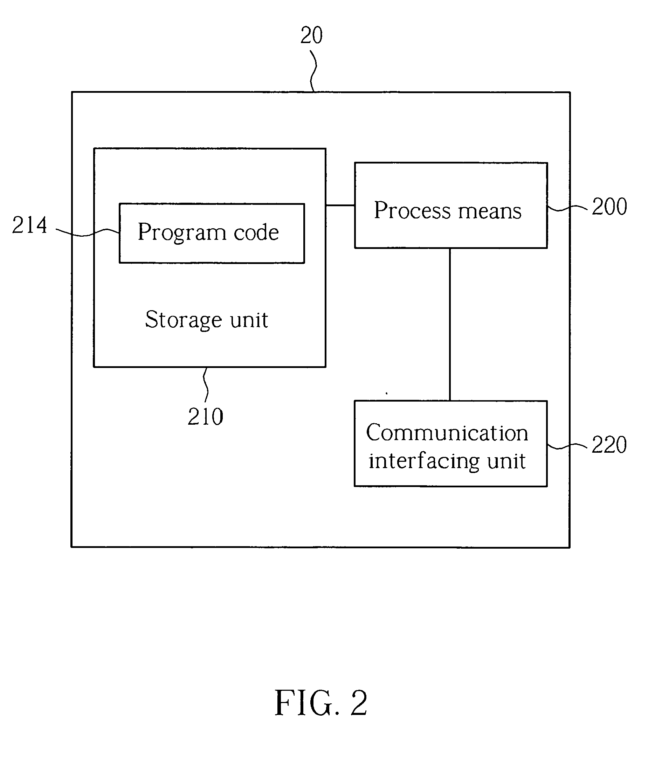

Please refer to Fig. 2, which is a schematic diagram of a communication device 20 according to an example of the present invention. The communication device 20 can be the UE or the network shown in Fig. 1, but is not limited herein. The communication device 20 may include a processor 200 such as a microprocessor or an Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver and can exchange wireless signals with the network according to processing results of the processor 200.

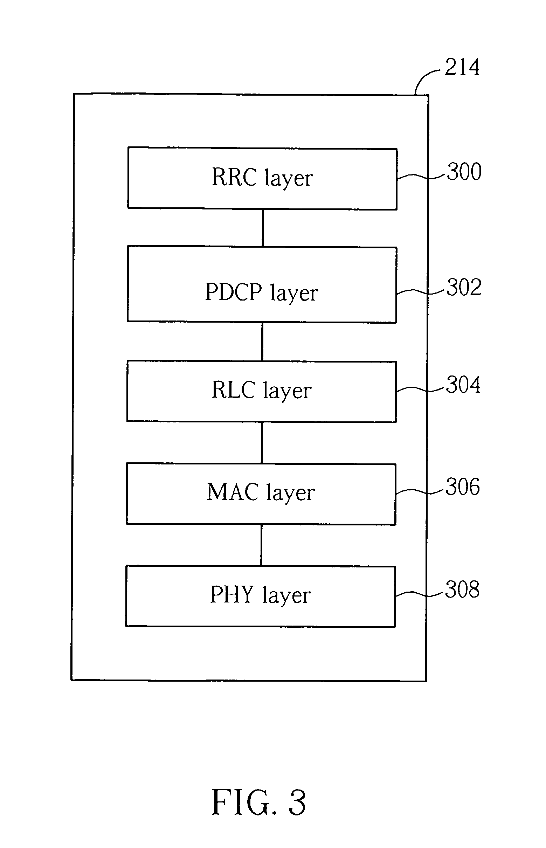

Please refer to Fig. 3, which illustrates a schematic diagram of communication protocol layers for the LTE-Advanced system. The behaviors of some of the protocol layers may be defined in the program code 214 and executed by the processing means 200. The protocol layers from top to bottom are a radio resource control (RRC) layer 300, a packet data convergence protocol (PDCP) layer 302, a radio link control (RLC) layer 304, a medium access control (MAC) layer 306 and a physical (PHY) layer 308. The RRC layer 300 is used for performing broadcast, paging, RRC connection management, measurement reporting and control and radio bearer control responsible for generating or releasing radio bearers. The PDCP layer 302 is used for header compression, ciphering and integrity protection of transmissions, and maintaining delivery order during a handover. The RLC layer 304 is used for segmentation/concatenation of packets and maintaining delivery sequence when packet loses. The MAC layer 306 is responsible for a hybrid automatic repeat request (HARQ) process, multiplexing logical channels, a random access channel (RACH) procedure and maintaining a UL timing alignment. In each HARQ process, an acknowledgement (ACK) is reported to the network if the MAC data/control packet is received and decoded successfully. Otherwise, a negative acknowledgement (NACK) is reported to the network. The PHY layer 308 is used to provide physical channels, e.g. a physical UL control channel (PUCCH), a physical DL control channel (PDCCH), a physical DL shared channel (PDSCH) etc.

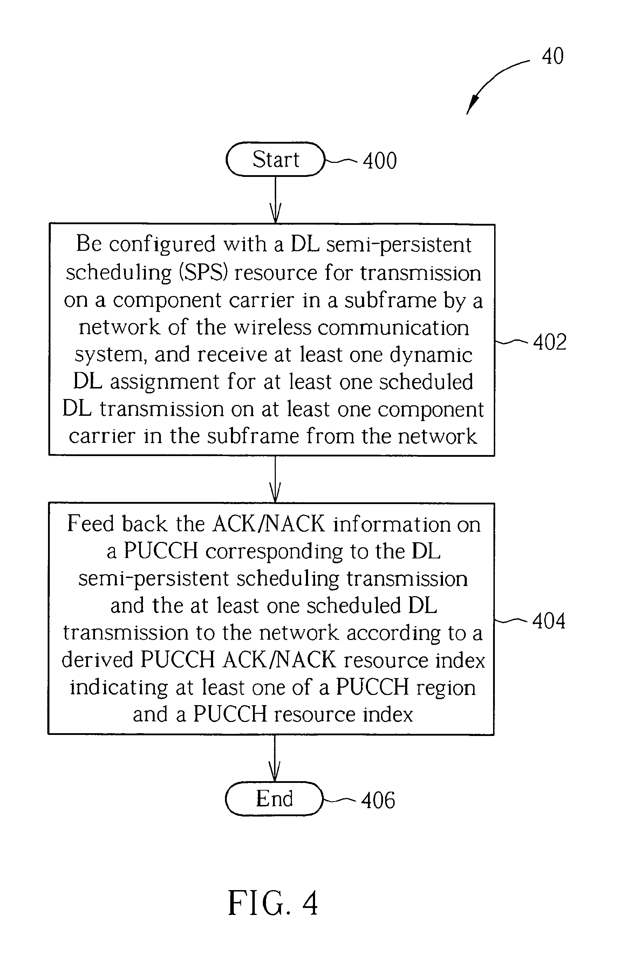

Please refer to Fig. 4, which is a flowchart of a process 40 according to an example of the present disclosure. The process 40 is utilized in a UE in the wireless communication system 10 shown in Fig. 1, to feed back ACK/NACK information to the network. The UE supports a carrier aggregation (e.g. one or more DL component carriers). The process 40 may be compiled into the program code 214 and includes the following steps:

Step 400: Start.

Step 402: Be configured with a DL semi-persistent scheduling (SPS) resource for transmission on a component carrier in a subframe by a network of the wireless communication system, and receive at least one dynamic DL assignment for at least one scheduled DL transmission on at least one component carrier in the subframe from the network.

Step 404: Feed back the ACK/NACK information on a PUCCH corresponding to the DL semi-persistent scheduling transmission and the at least one scheduled DL transmission to the network according to a derived PUCCH ACK/NACK resource index indicating at least one of a PUCCH region and a PUCCH resource index.

Step 406: End.

According to the process 40, after the UE is configured with the DL semi-persistent scheduling resource for transmission on the component carrier in the subframe by the network of the wireless communication system and receives the at least one dynamic DL assignment (e.g. a DL control information (DCI) format by the PDCCH) for the at least one scheduled DL transmission on the at least one component carrier in the subframe from the network, the UE then performs the DL semi-persistent scheduling transmission and the at least one scheduled DL transmission. After that, the UE feeds back the ACK/NACK information on the PUCCH (e.g. DCI format 1a/1b) corresponding to the DL semi-persistent scheduling transmission and the at least one scheduled DL transmission to the network according to the derived PUCCH ACK/NACK resource index (e.g. $n_{\mathrm{PUCCH}}^{(1)}$) indicating the at least one of the PUCCH region and the PUCCH resource index (e.g. (cyclic shift index $\alpha(n_s,l)$, orthogonal sequence index $n_{oc}(n_s)$)). Therefore, the UE can feed back the ACK/NACK information to the network when the DL semi-persistent scheduling transmission and the at least one scheduled DL transmission are configured and received, respectively.

Preferably, a PUCCH ACK/NACK resource index for the DL semi-persistent scheduling transmission on the component carrier is determined by a higher layer signaling, and each of at least one PUCCH ACK/NACK resource index for the at least one scheduled DL transmission using the at least one dynamic DL assignment (e.g. a DCI format by the PDCCH) on the at least one component carrier is respectively determined by the first control channel element (CCE) location index of each of the at least one dynamic DL assignment. In this situation, the UE selects one of the at least one PUCCH ACK/NACK resource index as the derived PUCCH ACK/NACK resource index. Further, the UE can select the one of the at least one PUCCH ACK/NACK resource index as the derived PUCCH ACK/NACK resource index according to a certain rule. For example, the certain rule may be the lowest CCE, the highest CCE, a CCE corresponding to the primary DL component carrier of the UE, or a CCE corresponding to a predefined or a configured DL component carrier of the UE. Besides, the at least one component carrier, on which the at least one scheduled DL transmission is received, comprise the component carrier on which the DL semi-persistent scheduling transmission is received, or the at least one component carrier does not comprise the component carrier. It is possible that the PUCCH is transmitted on the UL primary component carrier of the UE (e.g. assume the ACK/NACK for all component carriers in the subframe are multiplexed together in the same format).

Therefore, according to the above illustration and the process 40, the UE is able to feed back the ACK/NACK information to the network for the DL semi-persistent scheduling and the at least one dynamic DL assignment.

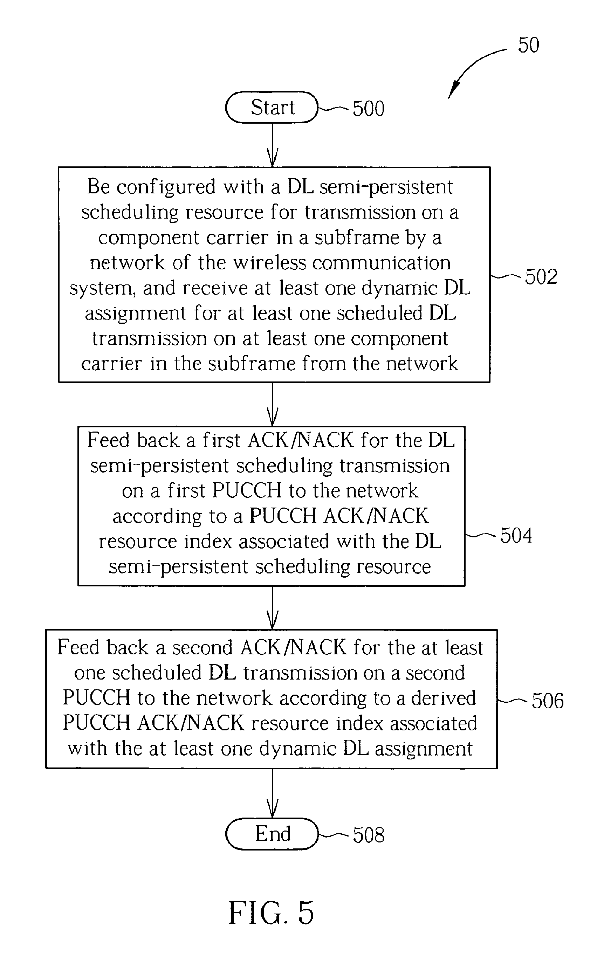

Please refer to Fig. 5, which is a flowchart of a process 50 according to an example of the present disclosure. The process 50 is utilized in a UE in the wireless communication system 10 shown in Fig. 1, to feed back ACK/NACK information on respective PUCCHs to the network. The UE supports a carrier aggregation (e.g. one or more DL component carriers). The process 50 may be compiled into the program code 214 and includes the following steps:

Step 500: Start.

Step 502: Be configured with a DL semi-persistent scheduling resource for transmission on a component carrier in a subframe by a network of the wireless communication system, and receive at least one dynamic DL assignment for at least one scheduled DL transmission on at least one component carrier in the subframe from the network.

Step 504: Feed back a first ACK/NACK for the DL semi-persistent scheduling transmission on a first PUCCH to the network according to a PUCCH ACK/NACK resource index associated with the DL semi-persistent scheduling resource.

Step 506: Feed back a second ACK/NACK for the at least one scheduled DL transmission on a second PUCCH to the network according to a derived PUCCH ACK/NACK resource index associated with the at least one dynamic DL assignment.

Step 508: End.

According to the process 50, after the UE is configured with the DL semi-persistent scheduling resource for transmission on the component carrier in the subframe by the network of the wireless communication system and receives the at least one dynamic DL assignment (e.g. a DCI format by the PDCCH) for the at least one scheduled DL transmission on the at least one component carrier in the subframe from the network, the UE then performs the DL semi-persistent scheduling transmission and the at least one scheduled DL transmission. After that, the UE feeds back the first ACK/NACK for the DL semi-persistent scheduling transmission on the first PUCCH (e.g. DCI format 1a/1b) to the network according to the PUCCH ACK/NACK resource index associated with the DL semi-persistent scheduling resource, and feeds back the second ACK/NACK for the at least one scheduled DL transmission on the second PUCCH (e.g. DCI format 1a/1b) to the network according to the derived PUCCH ACK/NACK resource index (e.g. $n_{\text{PUCCH}}^{(1)}$ ) associated with the at least one dynamic DL assignment. Therefore, the UE can feed back respective ACK/NACKs on corresponding PUCCHs for the DL semi-persistent scheduling transmission and the at least one scheduled DL transmission.

Preferably, the PUCCH ACK/NACK resource index for the DL semi-persistent scheduling transmission on the component carrier is determined by a higher layer signaling, and the derived PUCCH ACK/NACK index is determined from at least one PUCCH ACK/NACK resource index which is for the at least one scheduled DL transmission using the at least one dynamic DL assignment (e.g. a DCI format by the PDCCH) on the at least one component carrier wherein each of the at least one PUCCH ACK/NACK resource index is respectively determined by the first CCE location index of each of the at least one dynamic DL assignment. In this situation, the UE selects one of the at least one PUCCH ACK/ NACK resource index as the derived PUCCH ACK/NACK resource index for determining at least one of a PUCCH region (e.g. m) and a PUCCH resource index (e.g. (cyclic shift index $\alpha(n_s,l)$, orthogonal sequence index $n_{oc}(n_s)))$, to feed back the second ACK/NACK for the at least one scheduled DL transmission to the network. Further, the UE can select the one of the at least one PUCCH ACK/ NACK resource index as the derived PUCCH ACK/NACK resource index according to a certain rule. For example, the certain rule may be the lowest CCE, the highest CCE, a CCE corresponding to the primary DL component carrier of the UE, or a CCE corresponding to a predefined or a configured DL component carrier of the UE.

On the other hand, the UE may also use the PUCCH ACK/NACK resource index for determining at least one of a PUCCH region (e.g. m) and a PUCCH resource index (e.g. (cyclic shift index $\alpha(n_s,l)$, orthogonal sequence index $n_{oc}(n_s)))$, to feed back the first ACK/ NACK for the DL semi-persistent scheduling transmission to the network. Besides, the at least one component carrier for the at least one scheduled DL transmission comprises the component carrier for the DL semi-persistent scheduling transmission, or the at least one component carrier does not comprise the component carrier.

It is possible that the first PUCCH and the second PUCCH are on the UL primary component carrier of the UE (e.g. assume the ACK/NACK for all the at least one dynamic DL assignment in the subframe are multiplexed together in the same format).

Therefore, according to the above illustration and the process 50, the UE is able to feed back the respective ACK/NACKs for the DL semi-persistent scheduling transmission and the at least one scheduled DL transmission on corresponding PUCCHs to the network.

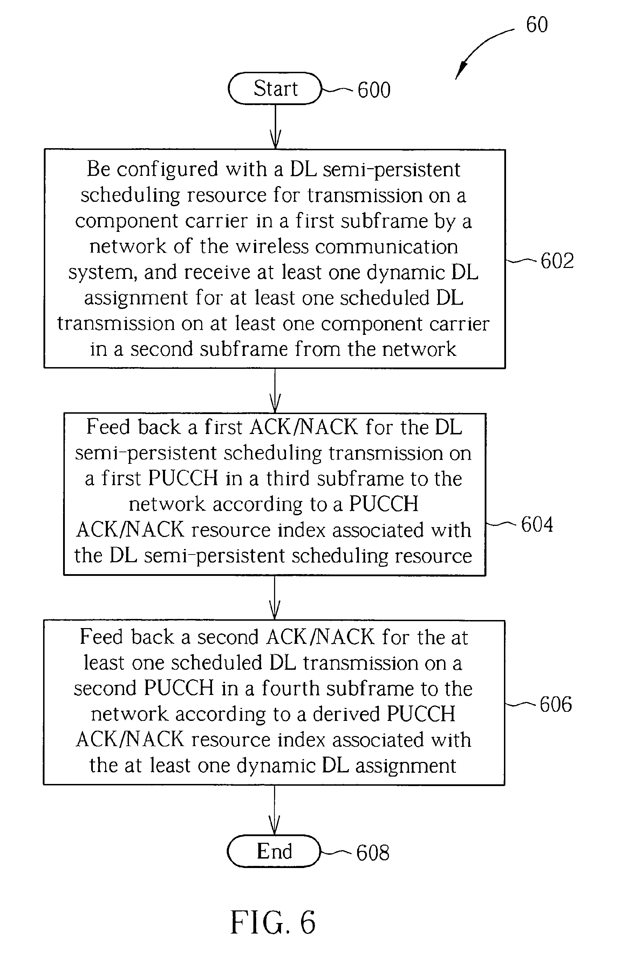

Please refer to Fig. 6, which is a flowchart of a process 60 according to an example of the present disclosure. The process 60 is utilized in a UE in the wireless communication system 10 shown in Fig. 1, to feed back ACK/NACK information on respective PUCCHs and subframes. The UE supports a carrier aggregation (e.g. one or more DL component carriers) . The process 60 may be compiled into the program code 214 and includes the following steps:

Step 600: Start.

Step 602: Be configured with a DL semi-persistent scheduling resource for transmission on a component carrier in a first subframe by a network of the wireless communication system, and receive at least one dynamic DL assignment for at least one scheduled DL transmission on at least one component carrier in a second subframe from the network.

Step 604: Feed back a first ACK/NACK for the DL semi-persistent scheduling transmission on a first PUCCH in a third subframe to the network according to a PUCCH ACK/NACK resource index associated with the DL semi-persistent scheduling resource.

Step 606: Feed back a second ACK/NACK for the at least one scheduled DL transmission on a second PUCCH in a fourth subframe to the network according to a derived PUCCH ACK/NACK resource index associated with the at least one dynamic DL assignment.

Step 608: End.

According to the process 60, after the UE is configured with the DL semi-persistent scheduling resource for transmission on the component carrier in the first subframe by the network of the wireless communication system and receives the at least one dynamic DL assignment (e.g. a DCI format by the PDCCH) for the at least one scheduled DL transmission on the at least one component carrier in the second subframe from the network, the UE then performs the DL semi-persistent scheduling transmission and the at least one scheduled DL transmission. After that, the UE feeds back the first ACK/NACK for the DL semi-persistent scheduling transmission on the first PUCCH (e.g. DCI format 1a/1b) in the third subframe to the network according to the PUCCH ACK/NACK resource index associated with the DL semi-persistent scheduling resource, and feeds back the second ACK/NACK for the at least one scheduled DL transmission on the second PUCCH (e.g. DCI format 1a/1b) in the fourth subframe to the network according to the derived PUCCH ACK/NACK resource index (e.g.

$n_{\text{PUCCH}}^{(1)}$ ) associated with the at least one dynamic DL assignment. Therefore, the UE can feed back respective ACK/NACKs on corresponding PUCCHs and subframes for the DL semi-persistent scheduling transmission and the at least one scheduled DL transmission.

Preferably, the PUCCH ACK/NACK resource index for the DL semi-persistent scheduling transmission on the component carrier is determined by a higher layer signaling, and the derived PUCCH ACK/NACK index is determined from at least one PUCCH ACK/NACK resource index which is for the at least one scheduled DL transmission using the at least one dynamic DL assignment (e.g. a DCI format by the PDCCH) on the at least one component carrier wherein each of the at least one PUCCH ACK/NACK resource index is respectively determined by the first CCE location index of each of the at least one dynamic DL assignment. In this situation, the UE selects one of the at least one PUCCH ACK/NACK resource index as the derived PUCCH ACK/NACK resource index for determining at least one of a PUCCH region (e.g. m) and a PUCCH resource index (e.g. (cyclic shift index $\alpha(n_s, l)$, orthogonal sequence index $n_{oc}(n_s)$)), to feed back the second ACK/NACK for the at least one scheduled DL transmission to the network. Further, the UE can select the one of the at least one PUCCH ACK/NACK resource index as the derived PUCCH ACK/NACK resource index according to a certain rule. For example, the certain rule may be the lowest CCE, the highest CCE, a CCE corresponding to the primary DL component carrier of the UE, or a CCE corresponding to a predefined or a configured DL component carrier of the UE.

On the other hand, the UE may also use the PUCCH ACK/NACK resource index for determining at least one of a PUCCH region and a PUCCH resource index, to feed back the first ACK/NACK for the DL semi-persistent scheduling transmission to the network. Besides, the at least one component carrier for the at least one scheduled DL transmission comprises the component carrier for the DL semi-persistent scheduling transmission, or the at least one component carrier does not comprise the component carrier. It is possible that the first PUCCH and the second PUCCH are on the UL primary component carrier of the UE (e.g. assume the ACK/NACK for all the at least one dynamic DL assignment in the subframe are multiplexed together in the same format).

Therefore, according to the above illustration and the process 60, the UE is able to feed back the respective ACK/NACKs for the DL semi-persistent scheduling transmission and the at least one scheduled DL transmission on corresponding PUCCHs and subframes to the network.

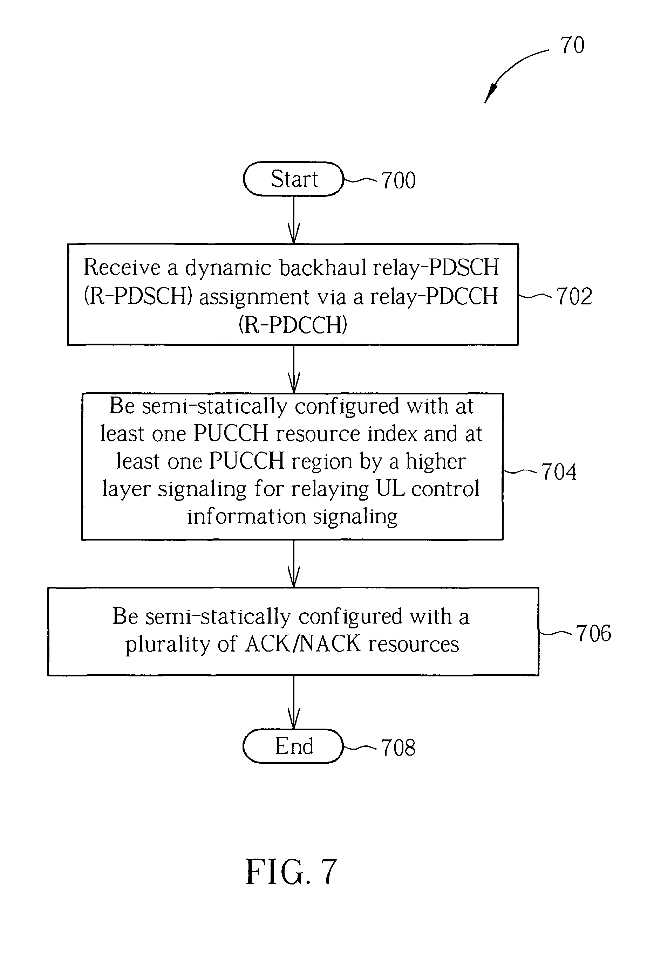

Please refer to Fig. 7, which is a flowchart of a process 70 according to an example of the present disclosure. The process 70 is utilized in a relay node of the wireless communication system 10 shown in Fig. 1, to handle an ACK/NACK information and PUCCH resources. The process 70 may be compiled into the program code 214 and includes the following steps:

Step 700: Start.

Step 702: Receive a dynamic backhaul relay-PDSCH (R-PDSCH) assignment via a relay-PDCCH (R-PDCCH).

Step 704: Be semi-statically configured with at least one PUCCH resource index and at least one PUCCH region by a higher layer signaling for relaying UL control information signaling.

Step 706: Be semi-statically configured with a plurality of ACK/NACK resources.

Step 708: End.

According to the process 70, after the relay node receive the dynamic backhaul R-PDSCH assignment via the R-PDCCH, the relay node is semi-statically configured with the at least one PUCCH resource index (e.g. a cyclic time shift index and an orthogonal spreading code index) and the at least one PUCCH region by the higher layer signaling for relaying the UL control information signaling, and is semi-statically configured with the plurality of ACK/NACK resources (e.g. on assigned ACK/NACK resource, scheduling request (SR) resource or channel quality indicator (CQI) resource). Therefore, the relay node can feedback the ACK/NACK to the network by using the plurality of ACK/NACK resources.

Preferably, a randomization for at least one of at least one PUCCH ACK/NACK resource index, the at least one PUCCH resource index and the at least one PUCCH region is achieved by adding a randomization function or a modulation operation (e.g. for inter-cell interference randomization), irrespective of corresponding semi-static configuration for the at least one PUCCH ACK/NACK resource index, the at least one PUCCH resource index and the at least one PUCCH region. Further, the first CCE location index of each R-PDSCH assignment is not related to each of the at least one PUCCH ACK/NACK resource index or is not used to derived each of the at least one PUCCH ACK/NACK resource index. The at least one PUCCH region is semi-statically configured while the at least one PUCCH resource index is randomized or hopped (e.g. by a length-31 Gold sequence generator). Besides, the at least one PUCCH resource index is semi-statically configured while the at least one PUCCH region is randomized or hopped (e.g. by a length-31 Gold sequence generator). It is possible that a search space design for the R-PDCCH is not related to a carrier indication field (CIF).

Therefore, according to the above illustration and the process 70, the relay node is able to feed back the ACK/NACK to the network by using the plurality of ACK/NACK resources.

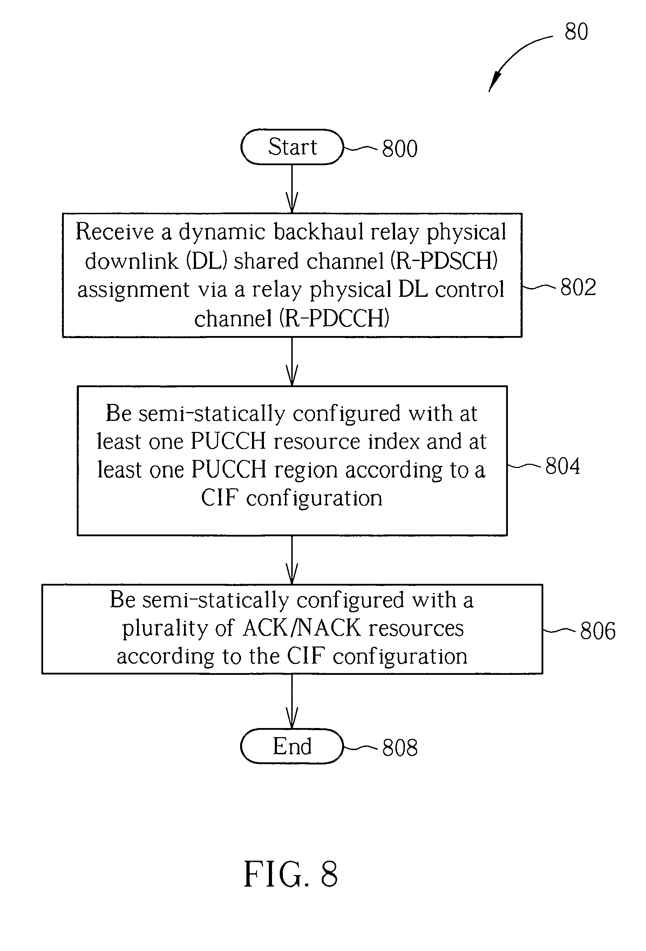

Please refer to Fig. 8, which is a flowchart of a process 80 according to an example of the present disclosure. The process 80 is utilized in a relay node of the wireless communication system 10 shown in Fig. 1, to handle an ACK/NACK and PUCCH resources. The process 80 may be compiled into the program code 214 and includes the following steps:

Step 800: Start.

Step 802: Receive a dynamic backhaul relay-PDSCH (R-PDSCH) assignment via a relay-PDCCH (R-PDCCH).

Step 804: Be semi-statically configured with at least one PUCCH resource index and at least one PUCCH region according to a CIF configuration.

Step 806: Be semi-statically configured with a plurality of ACK/NACK resources according to the CIF configuration.

Step 808: End.

According to the process 80, after the relay node receives the dynamic backhaul R-PDSCH assignment via the R-PDCCH, the relay node is semi-statically configured with the at least one PUCCH resource index (e.g. a cyclic time shift index and an orthogonal spreading code index) and the at least one PUCCH region according to the CIF configuration (e.g. upon configuration of the CIF), and is semi-statically configured with a plurality of ACK/NACK resources (e.g. on assigned ACK/NACK resource, SR resource or CQI resource) according to the CIF configuration (e.g. upon configuration of the CIF). Therefore, the relay node can feed back the ACK/NACK to the network by using the plurality of ACK/NACK resources. Preferably, the CIF configuration determines a component carrier-specific offset for search space determination, to determine the first control channel element (CCE) location index of the dynamic backhaul R-PDSCH assignment. Further, the first CCE location index determines a PUCCH ACK/NACK resource index for a PUCCH resource index (e.g. (cyclic shift index $\alpha(n_s, l)$, orthogonal sequence index $n_{oc}(n_s)$)) and a PUCCH region.

Therefore, according to the above illustration and the process 80, the relay node is able to feed back the ACK/NACK to the network by using the plurality of ACK/NACK resources.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

In conclusion, the present invention provides methods for UE to feed back ACK/NACK information when the UE supports carrier aggregation. Besides, methods for configuring PUCCH resource index, and ACK/NACK resources to a relay node semi-statically are also presented, to configure the relay node efficiently by considering stable link between the relay node and the corresponding eNB.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1.  A method of handling acknowledgement/negative acknowledgment (ACK/NACK) information of a mobile device in a wireless communication system, the mobile device supporting a carrier aggregation (CA), the method comprising:

    being configured with a downlink (DL) semi-persistent scheduling (SPS) resource for transmission on a component carrier in a subframe by a network of the wireless communication system, and receiving at least one dynamic DL assignment for at least one scheduled DL transmission on at least one component carrier in the subframe from the network; and
    feeding back ACK/NACK information on a physical uplink (UL) control channel (PUCCH) corresponding to the DL semi-persistent scheduling transmission and the at least one scheduled DL transmission to the network according to a derived PUCCH ACK/NACK resource index indicating at least one of a PUCCH region and a PUCCH resource index.

2.  The method of claim 1, wherein a PUCCH ACK/NACK resource index for the DL semi-persistent scheduling transmission on the component carrier is determined by a higher layer signaling, and each of at least one PUCCH ACK/NACK resource index for the at least one scheduled DL transmission on the at least one component carrier is respectively determined by the first control channel element (CCE) location index of each of the at least one dynamic DL assignment,
    the method preferably further comprising:

    selecting the PUCCH ACK/NACK resource index for the DL semi-persistent scheduling transmission as the derived PUCCH ACK/NACK resource index; or
    selecting one of the at least one PUCCH ACK/NACK resource index for the at least one scheduled DL transmission as the derived PUCCH ACK/NACK resource index,
    wherein selecting the one of the at least one PUCCH ACK/NACK resource index as the derived PUCCH ACK/NACK resource index preferably comprises:
    selecting the one of the at least one PUCCH ACK/NACK resource index as the derived PUCCH ACK/NACK resource index according to a certain rule.

3. The method of claim 1, wherein the PUCCH is on the UL primary component carrier of the mobile device.

4. A method of handling acknowledgement/negative acknowledgment (ACK/NACK) information of a mobile device in a wireless communication system, the mobile device supporting a carrier aggregation (CA), the method comprising:

being configured with a downlink (DL) semi-persistent scheduling (SPS) resource for transmission on a component carrier in a subframe by a network of the wireless communication system, and receiving at least one dynamic DL assignment for at least one scheduled DL transmission on at least one component carrier in the subframe from the network; feeding back a first ACK/NACK for the DL semi-persistent scheduling transmission on a first PUCCH to the network according to a PUCCH ACK/NACK resource index associated with the DL semi-persistent scheduling resource; and feeding back a second ACK/NACK for the at least one scheduled DL transmission on a second PUCCH to the network according to a derived PUCCH ACK/NACK resource index associated with the at least one dynamic DL assignment.

5. The method of claim 4, wherein the PUCCH ACK/NACK resource index for the DL semi-persistent scheduling transmission on the component carrier is determined by a higher layer signaling, and the derived PUCCH ACK/NACK index is determined from at least one PUCCH ACK/NACK resource index for the at least one scheduled DL transmission on the at least one component carrier wherein each of the at least one PUCCH ACK/NACK resource index is respectively determined by the first control channel element (CCE) location index of each of the at least one dynamic DL assignment, the method preferably further comprising:

selecting one of the at least one PUCCH ACK/NACK resource index as the derived PUCCH ACK/NACK resource index according to a certain rule, for determining at least one of a PUCCH region and a PUCCH resource index, to feed back the second ACK/NACK for the at least one scheduled DL transmission to the network, and/or

the method preferably further comprising:

using the PUCCH ACK/NACK resource index for determining at least one of a PUCCH region and a PUCCH resource index, to feed back the first ACK/NACK for the DL semi-persistent scheduling transmission to the network.

6. A method of handling acknowledgement/negative acknowledgment (ACK/NACK) information of a mobile device in a wireless communication system, the mobile device supporting a carrier aggregation (CA), the method comprising:

being configured with a downlink (DL) semi-persistent scheduling (SPS) resource for transmission on a component carrier in a first subframe by a network of the wireless communication system, and receiving at least one dynamic DL assignment for at least one scheduled DL transmission on at least one component carrier in a second subframe from the network; feeding back a first ACK/NACK for the DL semi-persistent scheduling transmission on a first PUCCH in a third subframe to the network according to a PUCCH ACK/NACK resource index associated with the DL semi-persistent scheduling resource; and feeding back a second ACK/NACK for the at least one scheduled DL transmission on a second PUCCH in a fourth subframe to the network according to a derived PUCCH ACK/NACK resource index associated with the at least one dynamic DL assignment.

7. The method of claim 6, wherein the PUCCH ACK/NACK resource index for the DL semi-persistent scheduling transmission on the component carrier is determined by a higher layer signaling, and the derived PUCCH ACK/NACK index is determined from at least one PUCCH ACK/NACK resource index for the at least one scheduled DL transmission on the at least one component carrier wherein each of the at least one PUCCH ACK/NACK resource index is respectively determined by the first control channel element (CCE) location index of each of the at least one dynamic DL assignment, the method preferably further comprising:

selecting one of the at least one PUCCH ACK/NACK resource index as the derived PUCCH ACK/NACK resource index according to a certain rule, for determining at least one of a PUCCH region and a PUCCH resource index, to feed back the second ACK/NACK for the at least one scheduled DL transmission to the network.

8. The method of any one of the preceding claims, wherein the certain rule is the lowest CCE, the highest CCE, a CCE corresponding to the primary DL component carrier of the mobile device, or a CCE corresponding to a predefined or a configured DL component carrier of the mobile device.

9. The method of claim 6 further comprising:

　　using the PUCCH ACK/NACK resource index for determining at least one of a PUCCH region and a PUCCH resource index, to feed back the first ACK/NACK for the DL semi-persistent scheduling transmission to the network.

10. The method of any one of the preceding claims, wherein the at least one component carrier comprises the component carrier, or the at least one component carrier does not comprise the component carrier.

11. The method of any one of claims 4 or 6, wherein the first PUCCH and the second PUCCH are on the UL primary component carrier of the mobile device.

12. A method of handling acknowledgement/negative acknowledgment (ACK/NACK) information and PUCCH resources of a relay node of a wireless communication system, the method comprising:

　　receiving a dynamic backhaul relay physical downlink (DL) shared channel (R-PDSCH) assignment via a relay physical DL control channel (R-PDCCH);
　　being semi-statically configured with at least one physical uplink (UL) control channel (PUCCH) resource index and at least one PUCCH region by a higher layer signaling for relaying UL control information signaling; and
　　being semi-statically configured with a plurality of ACK/NACK resources.

13. The method of claim 12, wherein randomization for at least one of at least one PUCCH ACK/NACK resource index, the at least one PUCCH resource index and the at least one PUCCH region is achieved by adding a randomization function or a modulation operation, irrespective of corresponding semi-static configuration for the at least one PUCCH ACK/NACK resource index, the at least one PUCCH resource index and the at least one PUCCH region,
wherein preferably the first control channel element (CCE) location index of each R-PDSCH assignment is not related to each of the at least one PUCCH ACK/NACK resource index or is not used to derive each of the at least one PUCCH ACK/NACK resource index, and/or
wherein preferably the at least one PUCCH region is semi-statically configured while the at least one PUCCH resource index is randomized or hopped;

or, the at least one PUCCH resource index is semi-statically configured while the at least one PUCCH region is randomized or hopped.

14. The method of claim 12, wherein a search space design for the R-PDCCH is not related to a carrier indication field (CIF).

15. A method of handling acknowledgement/negative acknowledgment (ACK/NACK) information and PUCCH resources of a relay node of a wireless communication system, the method comprising:

　　receiving a dynamic backhaul relay physical downlink (DL) shared channel (R-PDSCH) assignment via a relay physical DL control channel (R-PDCCH);
　　being semi-statically configured with at least one physical uplink (UL) control channel (PUCCH) resource index and at least one PUCCH region according to a carrier indication field (CIF) configuration; and
　　being semi-statically configured with a plurality of ACK/NACK resources according to the CIF configuration,
　　wherein preferably the CIF configuration determines a component carrier-specific offset for search space determination, to determine the first control channel element (CCE) location index of the dynamic backhaul R-PDSCH assignment, and the first CCE location index determines a PUCCH ACK/NACK resource index for a PUCCH resource index and a PUCCH region.

10

Network

UE ..... UE ..... UE

FIG. 1

20

| Storage unit | | Process means | 200 |

214 — Program code

Storage unit

210

Process means ~ 200

Communication interfacing unit ~ 220

FIG. 2

214

| RRC layer | — 300 |
|-----------|-------|
| PDCP layer | — 302 |
| RLC layer | — 304 |
| MAC layer | — 306 |
| PHY layer | — 308 |

FIG. 3

40

Start —400

Be configured with a DL semi-persistent scheduling (SPS) resource for transmission on a component carrier in a subframe by a network of the wireless communication system, and receive at least one dynamic DL assignment for at least one scheduled DL transmission on at least one component carrier in the subframe from the network

402

Feed back the ACK/NACK information on a PUCCH corresponding to the DL semi-persistent scheduling transmission and the at least one scheduled DL transmission to the network according to a derived PUCCH ACK/NACK resource index indicating at least one of a PUCCH region and a PUCCH resource index

404

End —406

FIG. 4

50

Start — 500

Be configured with a DL semi-persistent scheduling resource for transmission on a component carrier in a subframe by a network of the wireless communication system, and receive at least one dynamic DL assignment for at least one scheduled DL transmission on at least one component carrier in the subframe from the network — 502

Feed back a first ACK/NACK for the DL semi-persistent scheduling transmission on a first PUCCH to the network according to a PUCCH ACK/NACK resource index associated with the DL semi-persistent scheduling resource — 504

Feed back a second ACK/NACK for the at least one scheduled DL transmission on a second PUCCH to the network according to a derived PUCCH ACK/NACK resource index associated with the at least one dynamic DL assignment — 506

End — 508

FIG. 5

60

Start ─ 600

Be configured with a DL semi-persistent scheduling resource for transmission on a component carrier in a first subframe by a network of the wireless communication system, and receive at least one dynamic DL assignment for at least one scheduled DL transmission on at least one component carrier in a second subframe from the network ─ 602

Feed back a first ACK/NACK for the DL semi-persistent scheduling transmission on a first PUCCH in a third subframe to the network according to a PUCCH ACK/NACK resource index associated with the DL semi-persistent scheduling resource ─ 604

Feed back a second ACK/NACK for the at least one scheduled DL transmission on a second PUCCH in a fourth subframe to the network according to a derived PUCCH ACK/NACK resource index associated with the at least one dynamic DL assignment ─ 606

End ─ 608

FIG. 6

/ 70

```
       ( Start )──700
            │
            ▼
┌──────────────────────────────┐
│ Receive a dynamic backhaul relay-PDSCH │
│ (R-PDSCH) assignment via a relay-PDCCH │──702
│            (R-PDCCH)           │
└──────────────────────────────┘
            │
            ▼
┌──────────────────────────────┐
│ Be semi-statically configured with at │
│ least one PUCCH resource index and at │
│ least one PUCCH region by a higher │──704
│ layer signaling for relaying UL control │
│       information signaling     │
└──────────────────────────────┘
            │
            ▼
┌──────────────────────────────┐
│ Be semi-statically configured with a │
│    plurality of ACK/NACK resources   │──706
└──────────────────────────────┘
            │
            ▼
        ( End )──708
```

FIG. 7

_80_

Start —800

Receive a dynamic backhaul relay physical downlink (DL) shared channel (R-PDSCH) assignment via a relay physical DL control channel (R-PDCCH) —802

Be semi-statically configured with at least one PUCCH resource index and at least one PUCCH region according to a CIF configuration —804

Be semi-statically configured with a plurality of ACK/NACK resources according to the CIF configuration —806

End —808

FIG. 8